# EUROPÄISCHE PATENTANMELDUNG

(11) **EP 3 296 888 A1**
(43) Veröffentlichungstag der Anmeldung: **21.03.2018**
(21) Anmeldenummer: 16188696.5
(22) Anmeldetag: 14.09.2016
(51) Int. Cl.: G06F 17/30

(54) **VERFAHREN UND ENGINEERING-SYSTEM ZUR SYNCHRONISIERUNG EINER DATEIBASIERTEN SPEICHERSTRUKTUR MIT EINER DATENBANKBASIERTEN SPEICHERSTRUKTUR**

(71) Anmelder: Siemens Aktiengesellschaft, 80333 München (DE)
(72) Erfinder: Herla, Werner, 91315 Höchstadt (DE); Lange, Ronald, 90766 Fürth (DE)

(57) **Zusammenfassung**

Die Erfindung betrifft ein Verfahren zur Synchronisierung einer dateibasierten Speicherstruktur (FS) mit einer datenbankbasierten Speicherstruktur (DB) für ein industrielles Automatisierungsprogramm, wobei bei einer ersten Synchronisierung ein Synchronisierungsprotokoll erstellt oder aktualisiert wird, wobei für jedes synchronisierte Element (1, ..., 4) der datenbankbasierten Speicherstruktur (DB) ein digitaler Fingerabdruck (Fingerprint) erstellt und dieser sowohl in dem Synchronisierungsprotokoll als auch in einer Datei der dateibasierten Speicherstruktur (FS) mit dem synchronisierten Element (1, ..., 4) gespeichert wird, wobei bei einer zweiten Synchronisierung ein aktueller digitaler Fingerabdruck (Fingerprint) des erneut zu synchronisierenden Elementes (1, ..., 4) mit dem im Synchronisierungsprotokoll gespeicherten vorherigen digitalen Fingerabdruck (Fingerprint) des Elementes (1, ..., 4) und mit dem in der Datei gespeicherten Fingerabdruck (Fingerprint) jeweils verglichen wird, und wobei anhand von Übereinstimmungen bzw. Diskrepanzen des aktuellen digitalen Fingerabdrucks (Fingerprint) mit den bei der ersten Synchronisierung gespeicherten digitalen Fingerabdrücken (Fingerprint) über eine Notwendigkeit der Synchronisierung des jeweiligen Elementes (1, ..., 4) entschieden wird. Mittels eines solchen Verfahrens kann ein Engineering-System entscheiden, ob und ggf. in welche Richtung eine Synchronisierung der einzelnen Elemente zwischen dem datenbankbasierten System und dem dateibasierten System erfolgen muss.

## Beschreibung

Die Erfindung betrifft ein Verfahren zur Synchronisierung einer dateibasierten Speicherstruktur mit einer datenbankbasierten Speicherstruktur zur Speicherung des Quelltextes eines industriellen Automatisierungsprogramms gemäß dem Oberbegriff des Patentanspruchs 1, und ein Engineering-System zur Ausführung des Verfahrens gemäß dem Oberbegriff des Patentanspruchs 9.

Computerprogramme und insbesondere Programme für industrielle Automatisierungsanlagen, sogenannte PLC's (Programmable Logic Controller), werden mit Hilfe von Editoren erstellt und bearbeitet und auch gespeichert. Solche Editoren sind im industriellen Umfeld Bestandteil sogenannter Engineering-Systeme, die neben der Erstellung und Bearbeitung von Quelltext oder Quellcode der Automatisierungsprogramme auch weitere Aspekte oder "Facetten" eines industriellen Automatisierungssystems bzw. einer industriellen Automatisierungsanordnung betreffen. Die in den einzelnen Projekten bearbeiteten und gespeicherten Daten werden oft auch pauschal als "Engineering-Daten" bezeichnet, wobei diese Engineering-Daten in persistenter Form gespeichert werden müssen, also dauerhaft, aber auch bearbeitbar. Die Engineering-Daten können dabei in einzelne Informationseinheiten gegliedert werden, die oft auch als Elemente oder Fragmente bezeichnet werden. Ein Element oder Fragment kann dabei eine einzelne Anweisung, beispielsweise eine Befehlszeile sein, üblicherweise werden jedoch Gruppen von Informationen oder Anweisungen als Element oder Fragment betrachtet, beispielsweise Funktionsblöcke, Funktionsbausteine, Datenbausteine, Reglerbausteine, Gerätebeschreibungen oder dergleichen. Die Granularität der Fragmente oder Elemente hängt also im Wesentlichen einerseits von dem Bestreben ab, möglichst feingranular auf einzelne Elemente zugreifen zu können, andererseits aber ein Projekt übersichtlich zu erhalten.

Zur Speicherung der Engineering-Daten und damit der Elemente sind im Wesentlichen zwei unterschiedliche Ansätze gebräuchlich. Diese beiden Ansätze werden im Folgenden einerseits als "datenbankbasierte Speicherstruktur" oder auch "datenbankbasiertes repository" bezeichnet, und andererseits als "dateibasierte Speicherstruktur" oder "filebasiertes repository" bezeichnet. Der Begriff "Datenbank" wird dabei in der Form verstanden, dass dies eine Form der Ablage ist, die eine Anzahl von Elementen oder Artefakten der Engineering-Daten umfasst, wobei der Aufbau bzw. die Struktur dieser Ablage in der Regel nur dem zugehörigen Engineering-Werkzeug bzw. Engineering-System bekannt ist. Eine solche datenbankbasierte Speicherstruktur wird oft bevorzugt, weil in einer solchen Datenbank die Beziehungen und Abhängigkeiten zwischen den verschiedenen Elementen gut definiert und gespeichert werden könne, so dass bei Änderungen an einzelnen Elementen die davon abhängigen Änderungen an anderen Elementen leicht ermittelt und nachvollzogen werden können.

Bei einer datenbankbasierten oder -orientierten Speicherstruktur arbeitet also ein Engineering-System mit einer Ablage, in der alle Elemente oder Artefakte und ihre Beziehungen gespeichert werden. Somit kann das Engineering-System die Konsistenz des Gesamtmodells zu jedem Zeitpunkt sicherstellen, da es die komplette Kontrolle über die Datenablage mit den Elementen hat. Ferner können beispielsweise auch Zusatzdaten wie Cache-Informationen abgelegt werden und auch immer mit den eigentlichen Elementen bzw. Artefakten aktuell gehalten werden. Vor allem kann durch die vollständige Kontrolle über die Datenablage eine optimale physische Ablage der Daten in Speichermedien realisiert werden. Beispielsweise können Änderungen immer am Ende einer Datenablage bzw. Speichereinrichtung oder Speicherstruktur gespeichert werden, wobei ein Widerruf von Befehlen ("undo") einfach durch das Zurücksetzen des Dateiendes realisiert werden kann.

Bei einer dateibasierten oder -orientierten Speicherstruktur sind die Elemente oder Artefakte in einer oder meist mehreren Dateien ("files") gespeichert. Beispielsweise kann jedes Element oder Artefakt in einer eigenen Datei gespeichert sein, es ist jedoch genauso gut möglich, eine Anzahl oder gar alle Elemente oder Artefakte in einer gemeinsamen Datei zu speichern. Die Beziehungen zwischen den Elementen oder Artefakten sind auch in den Dateien abgespeichert, beispielsweise bei der Quelle einer solchen Beziehung. Die Konsistenz des Gesamtmodells kann bei dieser Ablage jedoch nicht per se sichergestellt werden, da die Dateien unabhängig voneinander geändert werden können. Beispielsweise kann in einer Datei eine Referenz auf ein Element bzw. Artefakt in einer anderen Datei hinterlegt sein, wobei es aber möglich ist, dass dieses Element oder die andere Datei bereits nicht mehr existiert. Üblicherweise muss bei dieser Form der Ablage auch das Format der Dateiablage offengelegt werden, damit beispielsweise die Dateien auch mit anderen Werkzeugen als dem erzeugenden Engineering-System bearbeitet werden können.

Obwohl inzwischen viele Engineering-Systeme wegen der geschilderten Vorteile nativ mit einer datenbankorientierten Speicherstruktur arbeiten, ist es häufig gefordert und notwendig, die Engineering-Daten mit einem dateibasierten System auszutauschen. Eine dateibasierte Speicherstruktur ist nämlich oft die Grundlage für die Integration des Engineering-Systems in ein sogenanntes Source-Code-Management-System (SCM) oder Basis für die Kollaboration mit anderen Werkzeugen.

Während der vollständige Export eines Projektes von einem datenbankbasierten System in ein dateibasiertes System und umgekehrt in der Regel problemlos ist, treten immer dann Probleme auf, wenn nach einer solchen Synchronisierung zwischen dem dateibasierten und dem datenbankbasierten System einzelne Elemente oder mehrere Elemente entweder in der datenbankbasierten Speicherstruktur oder in der dateibasierten Speicherstruktur verändert, gelöscht oder hinzugefügt werden. Insbesondere in sogenannten "Multi-User"-Konstellationen, in denen mehrere Benutzer gleichzeitig oder abwechselnd in den unterschiedlichen Speicherstrukturen ein solches Projekt bearbeiten, sind nachfolgende Synchronisierungen und somit der Erhalt einer Konsistenz des Projektes oft fehleranfällig und mit erheblichem manuellen Aufwand verbunden. Das Problem kann beispielsweise dadurch gelöst werden, dass ein "datenbankbasiertes repository" auf ein "filebasiertes repository" vollständig umgestellt wird. Eine solche Lösung zurück zu dateibasierten Speicherstrukturen erzeugt jedoch sehr hohe Entwicklungsaufwände, weil beispielsweise die gebräuchlichen Engineering-Systeme nicht auf Inkonsistenzen einer dateibasierten Datenablage eingerichtet sind. Darüber hinaus gehen die bereits beschriebenen spezifischen Vorteile einer datenbankbasierten Speicherstruktur, beispielsweise eine optimale physische Ablage der Daten und Abhängigkeiten, verloren.

Eine alternative Lösung des Problems besteht im Im- oder Export von Elementen oder Artefakten als einzelne Dateien. Diese Lösung hat den Nachteil, dass die Kontrolle über den "Workflow" in der Verantwortung eines Benutzers liegt und entsprechend aufwändig ist. So muss ein Anwender beispielsweise kontrollieren oder feststellen, wenn sich ein Element oder Objekt sowohl im datenbankbasierten Speichersystem als auch das entsprechende Element oder Artefakt in einer Datei geändert hat. Insbesondere die Änderung eines Elements oder Artfaktes in einem datenbankbasierten Datenbanksystem kann für einen Anwender schwierig bis unmöglich feststellbar sein. So werden bei gebräuchlichen datenbankbasierten Engineering-Systemen bei Änderungen an einem Element, beispielsweise bei einer Änderung des Namens, auch alle Elemente oder Artefakte wie beispielsweise Funktionsbausteine geändert, die dieses erstgenannte Element verwenden. Zum anderen kann auch der Zeitstempel eines Elementes, Objektes oder Artefaktes nur bedingt Auskunft darüber geben, ob eine funktionale Änderung des Elementes oder Objektes stattgefunden hat, weil ein Zeitstempel auch bei solchen Änderungen an einem Element oder Objekt verändert wird, die sich nicht in der externen Repräsentation oder Funktionalität des Elementes in einer Datei bzw. dateibasierten Darstellung manifestieren.

Es ist also eine Aufgabe der vorliegenden Erfindung, die Synchronisierung einer dateibasierten Speicherstruktur mit einer datenbankbasierten Speicherstruktur insbesondere für die Speicherung von Quellcode bzw. Quelltext eines industriellen Automatisierungsprogramms zu verbessern.

Zentrale Elemente der erfindungsgemäßen Lösung der Aufgabe sind zum einen die Erstellung digitaler Fingerabdrücke - oft auch als "Fingerprints" bezeichnet - der Elemente bzw. Artefakte des datenbankbasierten Speichersystems, dazu die Speicherung dieser digitalen Fingerprints sowohl in einem Synchronisierungsprotokoll, als auch in den jeweiligen Dateien des dateibasierten Speichersystems während es Exports bzw. der Synchronisierung, und zum anderen die Verwendung eines Integritätsschutzes oder Prüfwertes (z. B. CRC - Cyclic Redundancy Check oder eine digitale Signatur oder dgl.) in den jeweiligen Dateien des dateibasierten Speichersystems. Unter "Fingerprint" wird dabei ein Hashwert oder ein anderer Prüfwert verstanden, der sich nur dann ändert, wenn sich der "Quellanteil" eines Elementes oder Artefaktes ändert. Der "Quellanteil" eines Elementes oder Artefaktes entspricht dabei der Darstellung des Elementes oder Artefaktes in einer dateibasierten Speicherstruktur. Dieser "Quellanteil" kann neben einer Repräsentation des Elementes selbst auch die Beziehungen und Abhängigkeiten des Elementes zu anderen Elementen umfassen.

Der "Quellanteil" eines Funktionsbausteins einer speicherprogrammierbaren Steuerung beispielsweise entspricht dem Source-Code des Bausteins. Ein besonderer Vorteil ist dabei dadurch gegeben, dass der "Fingerprint" ausschließlich für eine interne Repräsentation des Elementes oder Artefaktes in dem "datenbankbasierten repository" berechnet werden muss. Eine Berechnung aufgrund einer möglicherweise abweichenden externen Repräsentation (z.B. nach einer Konvertierung in ein anderes Format) des Elementes oder Artefaktes ist nicht notwendig. Darüber hinaus ist auch keine Offenlegung der Fingerprint-Berechnung nötig, d.h., dass der Algorithmus ausschließlich dem Engineering-System bekannt sein muss. Die Prüfsumme der Datei (CRC) kontrolliert hingegen den kompletten Dateiinhalt inklusive der in der Datei gespeicherten Elemente/Artefakte und der dazugehörigen Fingerprints.

Die Aufgabe wird insbesondere durch das Verfahren gemäß Patentanspruch 1 und durch die Vorrichtung (Engineering-System) gemäß Patentanspruch 9 gelöst.

Dabei wird ein Verfahren zur Synchronisierung einer dateibasierten Speicherstruktur für die Speicherung eines industriellen Automatisierungsprogramms vorgeschlagen, wobei eine Anzahl von Elementen des Automatisierungsprogramms gespeichert und verwaltet werden, und wobei bei der Synchronisierung zumindest ein Teil der Elemente von der datenbankbasierten Speicherstruktur in eine oder mehrere Dateien exportiert werden, oder umgekehrt in die datenbankbasierte Speicherstruktur importiert werden. Dabei wird bei einer ersten Synchronisierung ein Synchronisierungsprotokoll erstellt oder aktualisiert, wobei für jedes synchronisierte Element der datenbankbasierten Speicherstruktur ein digitaler Fingerabdruck erstellt und diesen sowohl in dem Synchronisierungsprotokoll als auch in einer Datei der dateibasierten Speicherstruktur mit dem synchronisierten Element gespeichert wird, wobei zusätzlich die jeweilige Datei mit einem Integritätsschutz, z.B. einem Prüfwert oder einer digitalen Signatur oder dgl., versehen wird, wobei bei einer zweiten Synchronisierung ein aktueller digitaler Fingerabdruck des erneut zu synchronisierenden Elementes mit dem im Zuge der ersten Synchronisierung im Synchronisierungsprotokoll gespeicherten vorherigen digitalen Fingerabdruck des Elementes und mit dem in der Datei gespeicherten Fingerabdruck des Elementes jeweils verglichen wird sowie die Gültigkeit des Integritätsschutzes / Prüfwertes / Signatur der Datei überprüft wird, und wobei anhand von Übereinstimmungen bzw. Diskrepanzen des aktuellen digitalen Fingerabdrucks mit den bei der ersten Synchronisierung gespeicherten digitalen Fingerabdrücken und anhand der Gültigkeit des Integritätsschutzes / Prüfwertes / Signatur über eine Notwendigkeit der Synchronisierung des jeweiligen Elementes und gegebenenfalls über einen Import oder Export des Elementes zu oder von der datenbankbasierten Speicherstruktur entschieden wird. Mittels eines solchen Verfahrens kann ein Engineering-System weitgehend selbst entscheiden, ob und ggf. in welche Richtung eine Synchronisierung der einzelnen Elemente zwischen dem datenbankbasierten System und dem dateibasierten System erfolgen muss. Unnötige Synchronisierungen von einzelnen Elementen werden vermieden, nicht automatisch auflösbare Konflikte können einem Benutzer gemeldet werden.

Die Lösung der Aufgabe sieht außerdem ein Engineering-System zur Erstellung, Bearbeitung und Speicherung von Quelltextes oder Quellcode eines industriellen Automatisierungsprogramms vor, wobei das Engineering-System zur Speicherung von Elementen des industriellen Automatisierungsprogramms in einer datenbankbasierten Speicherstruktur ausgebildet ist, und wobei das Engineering-System Mittel zum Exportieren und Importieren von Elementen der datenbankbasierten Speicherstruktur in eine oder aus einer Datei einer dateibasierten Speicherstruktur aufweist. Dabei ist das Engineering-System zur Erstellung und/oder Aktualisierung eines Synchronisierungsprotokolls bei einer Synchronisierung der datenbankbasierten Speicherstruktur mit der dateibasierten Speicherstruktur eingerichtet ist, wobei das Engineering-System derart eingerichtet, dass bei einer ersten Synchronisierung ein Synchronisierungsprotokoll erstellt oder aktualisiert wird, wobei für jedes synchronisierte Element der datenbankbasierten Speicherstruktur ein digitaler Fingerabdruck erstellt und sowohl in dem Synchronisierungsprotokoll als auch in einer Datei der dateibasierten Speicherstruktur mit dem synchronisierten Element gespeichert wird, wobei zusätzlich die jeweilige Datei mit einem Integritätsschutze (Prüfwert, Signatur oder dgl.) versehen wird, wobei bei einer zweiten Synchronisierung ein aktueller digitaler Fingerabdruck des erneut zu synchronisierenden Elementes mit dem im Zuge der ersten Synchronisierung im Synchronisierungsprotokoll gespeicherten vorherigen digitalen Fingerabdruck des Elementes und mit dem in der Datei gespeicherten Fingerabdruck des Elementes jeweils verglichen werden sowie die Gültigkeit des Integritätsschutzes der Datei mit dem Element überprüft wird, und wobei anhand von Übereinstimmungen bzw. Diskrepanzen des aktuellen digitalen Fingerabdrucks mit den bei der ersten Synchronisierung gespeicherten digitalen Fingerabdrücken des Elementes und anhand der Gültigkeit des Integritätsschutzes über eine Notwendigkeit der Synchronisierung des jeweiligen Elementes und gegebenenfalls über einen Import oder Export des Elementes zu oder von der datenbankbasierten Speicherstruktur entschieden wird. Mit einem solchen Engineering-System können die bereits anhand des Verfahrens diskutierten Vorteile realisiert werden.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für das erfindungsgemäße Engineering-System. Die vorteilhaften Varianten können sowohl einzeln, als auch in sinnfälliger Kombination miteinander realisiert werden.

In einer vorteilhaften Ausgestaltung wird der digitale Fingerabdruck anhand einer Repräsentation des Elementes in der datenbankorientierten Speicherstruktur erstellt. Dies hat unter anderem den Vorteil, dass bei einer Zusammenarbeit mit mehreren unterschiedlichen dateibasierten Speicherstrukturen deren jeweilige Eigenarten nicht in den digitalen Fingerprint eingehen. Außerdem kann so die Verantwortung und damit auch die Kenntnis des zu verwendenden Algorithmus für die Erzeugung des Fingerprints im Bereich des Engineering-Systems verbleiben, was zur Datensicherheit und Systemsicherheit beiträgt. Vorteilhaft ist es dabei, wenn die Erstellung des digitalen Fingerprints nur funktionale Eigenschaften der jeweiligen Elemente oder Artefakte betrachtet, formale Eigenschaften jedoch, beispielsweise Darstellungsfarbe, Formatierungsangaben für die Darstellung des Quellcodes etc. jedoch außer Acht bleiben.

Vorteilhaft wird als Element eine einfache Anweisung, eine Anzahl Anweisungen, eine komplette Funktion oder ein vollständiger Funktionsbaustein eines Quelltextes/Quellcodes eines industriellen Automatisierungsprogramms verwendet. Ebenso lassen sich mit dem Verfahren bzw. der Anordnung auch jegliche andere textbasierten Repräsentationen aller Aspekte von Engineering-Daten beispielsweise von Programmen, Hardware-Konfigurationen, Parametern, Peripherie-Daten, oder dgl., insbesondere Daten in Projekten im Umfeld der industriellen Automatisierungstechnik, verwalten; alle diese Daten lassen sich als Elemente im hier gezeigten Kontext verwalten. In einer vorteilhaften Variante kann ein Benutzer eines Engineering-Systems einstellen, in welcher Granularität die Elemente in dem datenbankbasierten System und auch in dem dateibasierten System verwaltet werden sollen.

In einer vorteilhaften Ausgestaltung speichert das Synchronisierungsprotokoll auch jeweils einen Zeitstempel der bei der Synchronisierung erzeugten oder geänderten Datei des dateibasierten Speichersystems. Sofern bei der nächsten Synchronisierung die Datei weiterhin denselben Zeitstempel aufweist, kann davon ausgegangen werden, dass sich der Inhalt der Datei nicht geändert hat und somit das in der Datei gespeicherte Element/Artefakt und die zugehörige Fingerprint-Information unverändert sind. Somit können weitere Überprüfungen des Inhalts bzw. des Fingerprints entfallen, so dass nur ein Vergleich des in der Datei gespeicherten Fingerabdrucks (Fingerprints) mit dem aktuellen Fingerprint desselben Elements in der Version des datenbankbasierten Systems erfolgen muss. Damit kann der Synchronisierungsvorgang beschleunigt werden. Gemäß einer bevorzugten Ausführungsform erfolgt die Entscheidung über eine Synchronisierung einzelner Elemente und die dabei zu verwendende Synchronisierungs-Richtung anhand einer Entscheidungsmatrix, die in einer weiteren vorteilhaften Variante von einem Benutzer des Engineering-Systems einsehbar oder sogar änderbar ist.

Das erfindungsgemäße Verfahren und ein erfindungsgemäßes Engineering-System werden nachfolgend anhand der Zeichnungen erläutert. Dabei zeigen:
- Figur 1: zwei Engineering-Systeme, von denen eines mit einer datenbankbasierten Speicherstruktur arbeitet, und ein weiteres mit einer dateibasierten Speicherstruktur arbeitet,
- Figur 2: das Beispiel eines Synchronisierungsprotokolls, und
- Figur 3: eine Entscheidungsmatrix zur Berücksichtigung des Synchronisierungsprotokolls bei einer Synchronisierung.

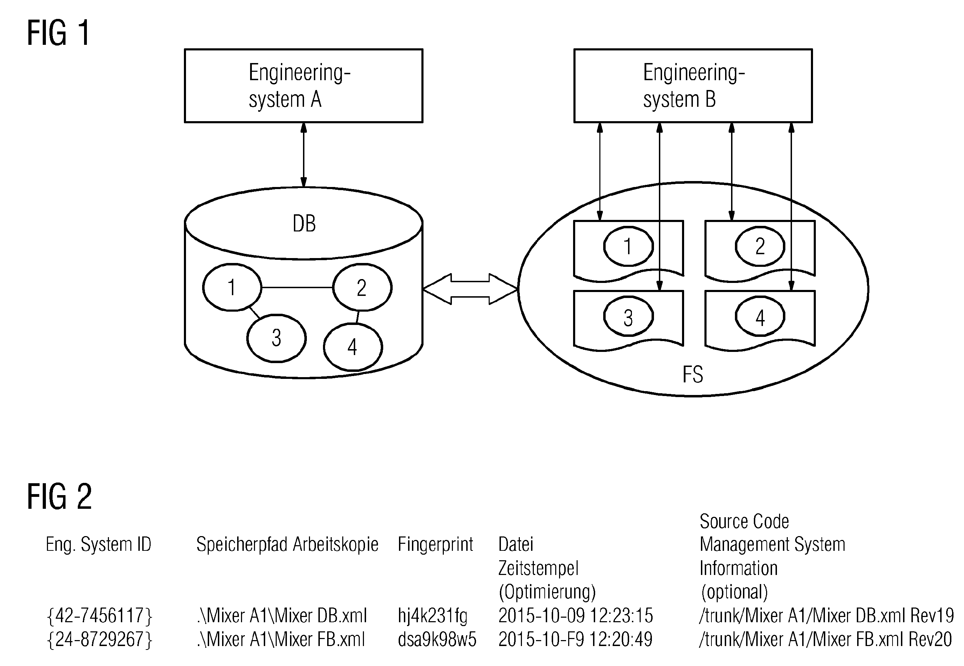

In der Figur 1 sind zwei gebräuchliche Ansätze zur Speicherung (Ablage) von Elementen (Fragmenten) 1, ..., 4 eines industriellen Automatisierungsprogramms gegenübergestellt. Ein erstes Engineering-System A (linksseitig dargestellt) verwendet dabei eine datenbankbasierte Speicherstruktur, die sowohl die Elemente 1, ..., 4 als auch die (in der Figur als Linien symbolisierten) Abhängigkeiten, Verknüpfungen und Querbeziehungen zwischen diesen umfasst. Die datenbankbasierte Speicherstruktur kann dabei beispielsweise eine relationale Datenbank sein, wobei jedes Element 1, ..., 4 ein eigener Datensatz o.ä. ist. Das in der Figur 1 rechtsseitig dargestellte Engineering-System B hingegen verwendet eine dateibasierte Speicherstruktur, wobei jedes der Elemente 1, ..., 4 in einer einzelnen Datei gespeichert ist, wobei die jeweilige Datei zur Bearbeitung, Verwendung oder Anzeige einzeln aus einem Massenspeicher ausgelesen bzw. in diesem gespeichert werden kann. Im Gegensatz zu der hier gezeigten Darstellung können auch mehrere Elemente bzw. Fragmente in einer gemeinsamen Datei gespeichert sein. Obwohl in dem vorliegenden Ausführungsbeispiel die Engineering-Systeme A, B der Erstellung und Verwaltung von Automatisierungsprogrammen in industriellen Automatisierungsanordnungen dienen, können diese Systeme auch eine andere Funktionalität haben, insbesondere kann das Engineering-System B auch ein Versionsverwaltungssystem für eine Mehrzahl von Benutzern eines Herstellers von Automatisierungsanordnungen sein, wobei dann das Engineering-System B mit der zugehörigen Dateiablage der Gesamtverwaltung der Projekte mit den Elementen 1, ... , 4 dient, wogegen das Engineering-System A vorwiegend ein Programmiersystem für einen einzelnen Benutzer ist, der bei der Bearbeitung eines Projektes oder eines Programmes die Vorzüge eines datenbankbasierten Ablagesystems nutzen möchte.

Im Folgenden soll angenommen werden, dass die datenbankbasierte Speicherstruktur, die auf der linken Seite der Figur 1 gezeigt ist, mit der dateibasierten Speicherstruktur, die auf der rechten Seite der Figur 1 gezeigt ist, mehrfach miteinander synchronisiert wird. Dabei können zwischen zwei Synchronisierungsvorgängen sowohl die Elemente 1, ..., 4 des datenbankbasierten Systems geändert werden, als auch diejenigen des dateibasierten Speichersystems. Mögliche Änderungen können auch die Abhängigkeiten oder Querbeziehungen zwischen den Elementen betreffen, die in beiden Speichersystemen unterschiedlich abgebildet werden, aber dennoch mit-synchronisiert werden müssen.

Ziel einer jeglichen Synchronsierung ist einerseits, nur solche Elemente auszutauschen bzw. zu importieren oder exportieren, die seit dem letzten Synchronisierungsvorgang verändert, gelöscht oder neu hinzugefügt wurden. Es ist also zunächst ein Identifizierungsproblem, solche Elemente 1, ..., 4 (oder zugehörige Beziehungen zwischen diesen) zu identifizieren, die überhaupt einer Synchronisierung bedürfen. Für diese Elemente muss dann in einem nächsten Schritt die Synchronisierungsrichtung festgelegt werden, also festgelegt werden, ob ein zu synchronisierendes Element aus Sicht des datenbankbasierten Systems importiert oder exportiert werden muss. Zusätzlich müssen auch solche Elemente identifiziert werden, die einer Entscheidung bedürfen, d. h., für die ein Benutzer entscheiden muss, welche der Versionen des entsprechenden Elementes, also eine Version aus dem datenbankbasierten Speichersystem oder aus dem dateibasierten Speichersystem, letztendlich für beide "Welten" verwendet werden soll.

In der Figur 2 ist exemplarisch ein Synchronisierungsprotokoll dargestellt, welches bei jeder Synchronisierung entweder erstellt oder verändert ("update") wird. Die in der Figur 2 dargestellte Struktur ist hier exemplarisch eine Tabelle. Andere Speicherformen und Darstellungsarten sind natürlich möglich. Im vorliegenden Beispiel wird für jedes synchronisierte Element 1, ..., 4 eine Zeile (Tabelleneintrag) angelegt bzw. aktualisiert, wobei die Elemente jeweils eine eigene Identifikationsnummer ID ("Engineering System ID") aufweisen. Diese Identifikationsnummer ID ist für jedes Element unveränderlich, unabhängig davon, ob das entsprechende Element bearbeitet, funktional geändert, konvertiert oder dergleichen wird. Zu jedem Element wird der "Speicherpfad Arbeitskopie" gespeichert, das ist die Speicherinformation für das entsprechende Element in dem dateibasierten Speichersystem (dateibasierte Speicherstruktur, Dateisystem). Bei jeder Synchronisierung wird über die Repräsentation (gespeicherte Darstellung) des Elementes ein sogenannter digitaler Fingerprint erzeugt und im Synchronisierungsprotokoll gespeichert.

Im vorliegenden Beispiel wird angenommen, dass es eine Vielzahl dateibasierter Speicherstrukturen mit jeweils unterschiedlicher Speicherkonvention für die Elemente 1, ..., 4 geben kann, so dass der digitale Fingerprint anhand der Repräsentation des Elementes in dem datenbankbasierten Speichersystem und vorzugsweise durch eine Funktionalität des Engineering-Systems A, also des "Inhabers" der datenbankbasierten Speicherstruktur, berechnet wird. Da alle in dem Verfahren verwendeten digitalen Fingerprints durch diese Funktionalität erzeugt werden, muss der Algorithmus der zur Erzeugung des digitalen Fingerprints nicht systemweit offengelegt werden. Der digitale Fingerprint kann ein Prüfwert sein, beispielsweise ein Hash-Wert o. ä., wobei der entsprechende Algorithmus derart ausgestaltet ist, dass unterschiedliche Elemente bzw. Elemente mit unterschiedlicher Funktionalität mit hoher Wahrscheinlichkeit auch einen unterschiedlichen digitalen Fingerprint erzeugen. Nichtfunktionale Eigenschaften, beispielsweise Formatierungsparameter für die Darstellung, sollen hingegen nach Möglichkeit keinen Einfluss auf den digitalen Fingerprint haben.

Zum Zeitpunkt der Synchronisierung wird der digitale Fingerprint des synchronisierten Elementes sowohl in das Synchronisierungsprotokoll geschrieben, als und auch in die Datei der dateibasieren Speicherstruktur, in der das jeweilige Element gespeichert ist. Optional kann der Fingerprint auch in der datenbankorientierten Speicherstruktur zu dem betreffenden Element gespeichert werden, was nachfolgende Synchronisierungen zwar beschleunigen kann, jedoch verlangt, dass bei jeder Änderung an der dort gespeicherten Version des Elementes der Fingerprint stets aktualisiert oder zumindest invalidiert werden muss.

Bei einem Abschluss der Synchronisierung wird für jede Datei ein Integritätsschutz, in diesem Beispiel ein "CRC" genannter Prüfwert, gebildet und in der oder zu der Datei gespeichert. Der Prüfwert kann ebenfalls ein sogenannter "Hash-Wert" oder eine andere geeignete Prüfsumme sein, die sowohl den Inhalt, also das synchronisierte Element, als auch den damit gespeicherten digitalen Fingerprint in der Datei absichert. Auch digitale Signaturen, Hash-Werte oder dergleichen eignen sich als Integritätsschutz. Dadurch führen sowohl eine Manipulation an dem in der Datei gespeicherten digitalen Fingerprint, als auch an dem in der Datei gespeicherten Element dazu, dass der gespeicherte Prüfwert ungültig wird, was dadurch festgestellt wird, dass bei einer erneuten Berechnung des Prüfwertes ein Unterschied zum zuvor gespeicherten Prüfwert derselben Datei festzustellen ist. Dieser Prüfwert muss jedoch nicht im Synchronisierungsprotokoll hinterlegt werden, sondern kann, wie erwähnt, mit der Datei gespeichert werden. Es muss sichergestellt sein, dass bei Änderungen des Dateiinhaltes, also des Elemente oder des Fingerprints, der Prüfwert oder allgemein der Integritätsschutz aktualisiert wird.

Das Synchronisierungsprotokoll umfasst also pro Element bzw. "Artefakt" zumindest eine Referenz (z.B. "ID")auf das Element im "datenbankbasierten repository", eine zweite Referenz auf das Element im "dateibasierten repository", und einen Fingerprint des Elementes im "datenbankbasierten repository" zum Zeitpunkt der letzten Synchronisierung. Optional kann auch ein Zeitstempel (Speicherzeitpunkt) der Datei, in der das jeweilige Element in der dateibasierten Speicherstruktur gespeichert wurde, und eine Datenbank-Information über den Speicherort des Elementes in der datenbankorientierten Speicherstruktur in dem Synchronisierungsprotokoll angegeben sein. Eine weitere Option ist in der letzten Spalte der Tabelle (Synchronisierungsprotokoll) dargestellt; es handelt sich dabei um Versionsinformationen eines Source-Code-Management-Systems, welches hier exemplarisches als zweites, dateibasiertes Engineeringsystem B betrachtet wird. In einer alternativen Ausführungsform kann das "datenbankorientierte repository" auch mit mehreren "dateibasierten repositories" synchronisiert werden, wobei dann das Synchronisierungsprotokoll entsprechend erweitert wird, oder aber mehrere Synchronisierungsprotokolle verwaltet werden.

Bei einer späteren, nachfolgenden Synchronisierung werden verschiedene Informationen miteinander in Bezug gesetzt, um Erfordernis und ggf. Richtung einer Synchronisierung festzustellen oder auch Konfliktsituationen in Bezug auf die einzelnen erneut zu synchronisierenden Elemente zu detektieren. Dazu wird erneut ein digitaler Fingerprint über die zum Zeitpunkt der nachfolgenden Synchronisierung vorliegende Version des jeweiligen Elementes in der datenbankorientierten Speicherstruktur erstellt (sofern nicht ohnehin ein solcher vorliegt) und mit den gespeicherten digitalen Fingerprints des selben Elementes aus dem bestehenden Synchronisierungsprotokoll und dem gespeicherten Fingerprint aus der entsprechenden bestehenden Datei der dateibasierten Speicherstruktur ausgelesen. Letzteres setzt jedoch voraus, dass der Integritätsschutz, also hier die Prüfsumme der entsprechenden Datei gültig ist, sich der Inhalt der Datei also seit dem letzten Speicherzeitpunkt nicht geändert hat. Es ist schließlich möglich, dass das Element in dem dateibasierten Speichersystem geändert wurde, der in derselben Datei gespeicherte zugeordnete digitale Fingerprint jedoch unverändert belassen wurde. In diesem Fall ergibt sich ein anderer Prüfwert, so dass der in der Datei gespeicherte digitale Fingerprint ohnehin als korrumpiert angesehen werden muss. Umgekehrt wird ein schlüssiger Prüfwert alleine nicht als Beweis dafür angesehen, dass der Inhalt der Datei unverändert ist, so dass auch bei plausiblem Prüfwert der Fingerprint aus der Datei mit dem in dem Synchronisierungsprotokoll gespeicherten Fingerprint verglichen werden soll.

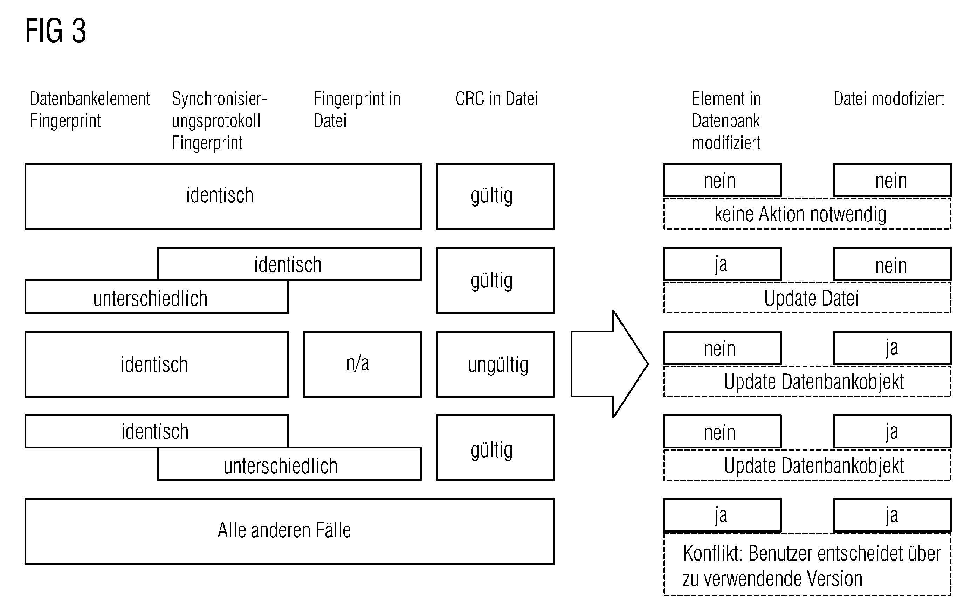

In der Figur 3 ist eine Entscheidungstabelle oder Entscheidungsmatrix mit der jeweiligen durchzuführenden Aktion dargestellt. Bei der Anwendung der Entscheidungsmatrix wird jedes Element bzw. Artefakt separat betrachtet. Zunächst werden aufgrund der Referenzen (Speicherpfad Arbeitskopie bzw. Datenbank Information oder Engineering-System ID) im Synchronisierungsprotokoll das jeweilige Element sowohl im datenbankbasierten repository als auch in der entsprechenden Datei identifiziert. Sofern beide Elemente nicht mehr existieren, d. h. weder in der Datenbank noch im Dateisystem gespeichert ist, ist keine weitere Aktion notwendig. Existiert in beiden Speichersystemen jeweils eine Version des Elementes, so müssen einige Fälle unterschieden werden. Ist beispielsweise der aktuelle digitale Fingerprint des Elementes in der Version der Datenbank identisch mit dem digitalen Fingerprint im Synchronisierungsprotokoll, wurde dieses Element folglich seit der letzten Synchronisierung im datenbankbasierten repository nicht mehr geändert ("Objekt in Datenbank modifiziert: nein"). Ansonsten wurde das Element im datenbankbasierten repository geändert (2. Zeile der Entscheidungsmatrix).

Weiterhin wird wie bereits beschrieben geprüft, ob der Prüfwert (CRC) der Datei weiterhin gültig ist. Falls ja, wird weiterhin geprüft, ob der digitale Fingerprint identisch ist mit dem Fingerprint im Synchronisierungsprotokoll. Falls ja, wurde das Element zwischenzeitlich, also seit der letzten Synchronisierung, in der dateibasierten Speicherstruktur nicht geändert ("Datei modifiziert - nein"). Anderenfalls wurde das Element im Dateisystem zwischenzeitlich geändert ("Datei modifiziert - ja"). Sofern der Prüfwert der entsprechenden Datei nicht mehr gültig ist, sich also ein neu errechneter Prüfwert von einem während der letzten Synchronisierung gespeicherten Prüfwert unterscheidet, wurde das Element im dateibasierten Speichersystem zwischenzeitlich geändert ("Datei modifiziert - ja").

Wurde keines der beiden Elemente bzw. keine der beiden Versionen des Elementes geändert, ist keine weitere Aktion nötig. Wurde zwischenzeitlich nur eine der beiden Versionen des Elementes geändert, so ist die jeweils andere Version in dem anderen Speichersystem zu aktualisieren. Im neuen oder nun geänderten Synchronisierungsprotokoll ist der neue digitale Fingerprint des Elementes aus der Version im datenbankbasierten repository einzutragen bzw. zu ändern. Wurden zwischenzeitlich beide Versionen des Elementes geändert, ist eine Konfliktlösung durchzuführen. Diese kann beispielsweise darin bestehen, dass ein Anwender des Engineering-Systems eine der beiden Versionen des Elementes als "Master" bestimmt, mit dem die jeweils andere Repräsentierung des Elementes überschrieben wird.

Zusätzlich wird es vorkommen, dass Elemente entweder im datenbankbasierten repository oder im dateibasierten repository zu finden sind, die nicht im Synchronisierungsprotokoll referenziert sind, also bei der letzten Synchronisierung nicht bearbeitet worden sind. Diese Elemente wurden seit der letzten Synchronisierung neu erstellt und sind damit im Zuge der Synchronisierung im jeweils anderen Speichersystem neu anzulegen.

Durch die Aufnahme eines Zeitstempels, der jeweils den Speicherzeitpunkt der Datei mit dem Element bei der letzten Synchronisierung betrifft, sind Optimierungen möglich, die in einzelnen Fällen die neue Errechnung eines digitalen Fingerprints und andere Aktionen einsparen oder abkürzen können.

Durch das hier geschildete Verfahren ist es möglich, die Synchronisierung auf eine Teilmenge der Elemente des datenbankbasierten repository oder des dateibasierten repository zu beschränken. Ein Anwender oder ein System (Software) kann also eine Teilmenge ("subset") festlegen, so dass die Synchronisierung zum einen auf funktional erforderliche Elemente oder Gruppen von Anweisungen, Artefakten etc. beschränkt werden kann, und zum anderen die Realisierung oder Einführung des geschilderten Verfahrens in bestehenden Systemen als Stufenlösung schrittweise erfolgen kann.

## Patentansprüche

1. Verfahren zur Synchronisierung einer dateibasierten Speicherstruktur (FS) mit einer datenbankbasierten Speicherstruktur (DB) für ein industrielles Automatisierungsprogramm,
wobei eine Anzahl von Elementen (1, ..., 4) des Automatisierungsprogramms verwaltet werden, und
wobei bei der Synchronisierung zumindest ein Teil der Elemente (1, ..., 4) zwischen der datenbankbasierten Speicherstruktur (DB) und einer oder mehreren Dateien der dateibasierten Speicherstruktur (FS) ausgetauscht werden,
**dadurch gekennzeichnet,**
**dass** bei einer ersten Synchronisierung ein Synchronisierungsprotokoll erstellt oder aktualisiert wird, wobei für jedes synchronisierte Element (1, ..., 4) der datenbankbasierten Speicherstruktur (DB) ein digitaler Fingerabdruck (Fingerprint) erstellt und sowohl in dem Synchronisierungsprotokoll als auch in einer Datei der dateibasierten Speicherstruktur (FS) mit dem synchronisierten Element (1, ..., 4) gespeichert wird, wobei zusätzlich die jeweilige Datei mit einem Integritätsschutz (CRC) versehen wird,
**dass** bei einer zweiten Synchronisierung ein aktueller digitaler Fingerabdruck (Fingerprint) des erneut zu synchronisierenden Elementes (1, ..., 4) mit dem im Zuge der ersten Synchronisierung im Synchronisierungsprotokoll gespeicherten vorherigen digitalen Fingerabdruck (Fingerprint) des Elementes (1, ..., 4) und mit dem in der Datei gespeicherten Fingerabdruck (Fingerprint) des Elementes (1, ..., 4) jeweils verglichen wird sowie die Gültigkeit des Integritätsschutzes (CRC) der Datei überprüft wird, und
**dass** anhand von Übereinstimmungen bzw. Diskrepanzen bei den vergleichen und anhand der Gültigkeit des Integritätsschutzes (CRC) über eine Notwendigkeit und gegebenenfalls Richtung der Synchronisierung des jeweiligen Elementes (1, ..., 4) entschieden wird.

2. Verfahren nach Patentanspruch 1,
**dadurch gekennzeichnet,**
**dass** der digitale Fingerabdruck (Fingerprint) des Elementes (1, ..., 4) jeweils anhand einer Repräsentation dieses Elementes (1, ..., 4) in der datenbankorientierten Speicherstruktur (DB) erstellt wird.

3. Verfahren nach einem der vorhergehenden Patentansprüche,
**dadurch gekennzeichnet,**
**dass** der digitale Fingerabdruck (Fingerprint) nur anhand funktionaler Eigenschaften des jeweiligen Elementes (1, ..., 4) gebildet wird und nichtfunktionale Eigenschaften des Elementes (1, ..., 4) sich nicht auf den digitalen Fingerabdruck (Fingerprint) auswirken.

4. Verfahren nach einem der vorhergehenden Patentansprüche,
**dadurch gekennzeichnet,**
**dass** als Element (1, ..., 4) des industriellen Automatisierungsprogramms eine einzelne Anweisung, eine Anzahl Anweisungen, eine Funktion oder ein Funktionsbaustein eines Quellcodes des industriellen Automatisierungsprogramms verwendet wird.

5. Verfahren nach einem der vorhergehenden Patentansprüche,
**dadurch gekennzeichnet,**
**dass** die datenbankbasierte Speicherstruktur (DB) von einem Engineering-System (A) einer industriellen Automatisierungsanordnung verwaltet wird.

6. Verfahren nach Patentanspruch 5,
**dadurch gekennzeichnet,**
**dass** die digitalen Fingerprints jeweils durch das Engineering-System (A) errechnet werden und das Synchronisierungsprotokoll jeweils durch das Engineering-System erstellt oder aktualisiert und gespeichert wird.

7. Verfahren nach einem der vorhergehenden Patentansprüche,
**dadurch gekennzeichnet,**
**dass** in dem Synchronisierungsprotokoll bei der ersten Synchronisierung ein jeweils aktueller Zeitstempel einer Datei der dateibasierten Speicherstruktur (FS) mit dem synchronisierten Element (1, ..., 4) gespeichert wird, wobei im Zuge der zweiten Synchronisierung überprüft wird, ob ein aktueller Zeitstempel der Datei mit dem gespeicherten Zeitstempel der Datei übereinstimmt, wobei nur im Falle einer Diskrepanz der Integritätsschutz (CRC) der Datei überprüft wird und die Gültigkeit des digitalen Fingerabdrucks (Fingerprint) in der Datei überprüft wird, und anderenfalls die Gültigkeit des Integritätsschutzes und des in der Datei gespeicherten digitalen Fingerabdrucks (Fingerprint) angenommen wird.

8. Verfahren nach einem der vorhergehenden Patentansprüche,
**dadurch gekennzeichnet,**
**dass** die Entscheidung über die Notwendigkeit der Synchronisierung des Elementes (1, ..., 4) und gegebenenfalls über einen Import oder Export des Elementes (1, ..., 4) im Zuge der zweiten Synchronisierung anhand einer Entscheidungsmatrix getroffen wird.

9. Engineering-System zur Erstellung, Bearbeitung und Speicherung von Quelltextes oder Quellcode eines industriellen Automatisierungsprogramms,
wobei das Engineering-System (A) zur Speicherung von Elementen (1, ..., 4) des industriellen Automatisierungsprogramms in einer datenbankbasierten Speicherstruktur (DB) ausgebildet ist, und
wobei das Engineering-System (A) Mittel zum Exportieren und Importieren von Elementen (1, ..., 4) der datenbankbasierten Speicherstruktur (DB) in eine oder aus einer Datei einer dateibasierten Speicherstruktur (FS) aufweist,
**dadurch gekennzeichnet,**
**dass** das Engineering-System (A) zur Erstellung und/oder Aktualisierung eines Synchronisierungsprotokolls bei einer Synchronisierung der datenbankbasierten Speicherstruktur (DB) mit der dateibasierten Speicherstruktur (FS) eingerichtet ist,
wobei das Engineering-System (A) derart eingerichtet ist,
**dass** bei einer ersten Synchronisierung ein Synchronisierungsprotokoll erstellt oder aktualisiert wird, wobei für jedes synchronisierte Element (1, ..., 4) der datenbankbasierten Speicherstruktur (DB) ein digitaler Fingerabdruck (Fingerprint) erstellt und sowohl in dem Synchronisierungsprotokoll als auch in einer Datei der dateibasierten Speicherstruktur (FS) mit dem synchronisierten Element (1, ..., 4) gespeichert wird, wobei zusätzlich die jeweilige Datei mit einem Integritätsschutze (CRC) versehen wird,
das bei einer zweiten Synchronisierung ein aktueller digitaler Fingerabdruck (Fingerprint) des erneut zu synchronisierenden Elementes (1, ..., 4) mit dem im Zuge der ersten Synchronisierung im Synchronisierungsprotokoll gespeicherten vorherigen digitalen Fingerabdruck (Fingerprint) des Elementes (1, ..., 4) und mit dem in der Datei gespeicherten Fingerabdruck (Fingerprint) des Elementes (1, ..., 4) jeweils verglichen werden sowie die Gültigkeit des Integritätsschutzes (CRC) der Datei mit dem Element (1, ..., 4) überprüft wird, und
das anhand von Übereinstimmungen bzw. Diskrepanzen des aktuellen digitalen Fingerabdrucks (Fingerprint) mit den bei der ersten Synchronisierung gespeicherten digitalen Fingerabdrücken (Fingerprint) des Elementes (1, ..., 4) und anhand der Gültigkeit des Integritätsschutzes (CRC) über eine Notwendigkeit der Synchronisierung des jeweiligen Elementes (1, ..., 4) und gegebenenfalls über einen Import oder Export des Elementes (1) zu oder von der datenbankbasierten Speicherstruktur (DB) entschieden wird.
